# EUROPEAN PATENT APPLICATION

(11) **EP 4 480 647 A1**
(43) Date of publication of application: **25.12.2024**
(21) Application number: 23180376.8
(22) Date of filing: 20.06.2023
(51) Int. Cl.: B25J 9/16, G05B 19/4068, G05B 19/4069

(54) **METHODS AND SYSTEMS FOR MONITORING A MACHINING OF A WORK-PIECE**

(71) Applicant: Siemens Aktiengesellschaft, 80333 München (DE)
(72) Inventor: Krüger, Daniel, 91154 Roth (DE)
(74) Representative: Siemens Patent Attorneys

(57) **Abstract**

Method for monitoring a machining, in particular, subtractive machining of a workpiece (105) with an aid of a CNC machine (104), the method comprising
at an interface (101),
- receiving (200) input data comprising
a motion trajectory data of a tool (106) of the CNC machine (104), wherein, during machining of the workpiece (105), the tool (106) is moving along the motion trajectory,
at a computing system (102),

- generating (201) a voxel-based representation of the workpiece (105) from the input data, wherein the generating comprises specifying a voxel size so that the voxel size corresponds to a surface roughness of a machined surface of the workpiece,
at a displaying device (103),
- visualizing (202) the voxel-based representation of the workpiece with a resolution determined by the voxel size.

## Description

*Independent of the grammatical term usage, individuals with male, female or other gender identities are included within the term.*

The subject-matter disclosed herein relates to a method for monitoring a machining, in particular, a subtractive machining of a workpiece with an aid of a CNC machine. The method comprises receiving (e.g., in real-time) input data, at an interface of a system, the input data comprising a motion trajectory data of a tool (or a tool insert) of the CNC machine - or a tool motion trajectory data, wherein, during machining the workpiece, the tool (had/has been) is moving along the motion trajectory.

Furthermore, the subject-matter relates to a system for carrying out the above-mentioned method, to a computer program product comprising instructions which, when executed by a computer, cause the computer to carry out the above-mentioned method, and to a computer readable medium with such program.

The quality of CNC manufactured workpieces, which is, within the scope of the present disclosure, geometrical accuracy and surface quality vastly depends on the characteristics of the tool's motion. Hence, when investigating root cause of quality issues, a process engineer should be able to identify affected areas of the workpiece and, preferably to relate them to the process context.

According to the prior art approaches scalar process data can be mapped to a 3D point cloud representation of the tool's motion trajectory (sequence of discrete tool positions) whereby the magnitude of the data is encoded as color. A 3D point cloud representation of the motion trajectory can also be associated to the G-Code program. Therefor each point on the trajectory is mapped to the code block that was used to program the respective tool position. The user (process engineer) can interactively navigate in the G-Code program by selecting points in the point cloud.

However, the workpiece quality is not directly considered as the visualization of the tool motion trajectory alone doesn't contain any immediate information about quality of the workpiece surface. Moreover, a less experienced operator may struggle to identify even the actual workpiece shape in this rather abstract graphical representation.

The objective of the present disclosure is to address these issues.

The objective is achieved by the above-mentioned method which further comprises:
at a computing system,
   - generating a voxel-based representation of the workpiece from the input data, wherein the generating comprises specifying a voxel size (size of each voxel) so that the voxel size corresponds to or is essentially of the order of a surface roughness of a machined surface of the workpiece, and
at a displaying device,
   - visualizing the voxel-based representation of the workpiece with a resolution determined by the voxel size.

The visualized voxel-based representation of the workpiece is a (preferably 3D) visualization of the workpiece on the displaying device. The visualization can be in grayscale.

The surface roughness of a machined surface of the workpiece is a parameter that can be preset or measured after the machining. In this way, e.g., for cutting operation, even cut marks can be easily recognized on the visualized surface of the machined workpiece.

The tool motion trajectory data is preferably discrete and can be readily visualized as a point cloud.

In an embodiment, the input data comprises a part program code and the method further comprises associating the tool motion trajectory with the part program code. The program code is preferably visualized next to workpiece at the displaying device.

In an embodiment, the generating comprises storing in each voxel a tool position index from the tool motion trajectory data, wherein different tool position indexes are stored in different voxels. Other simulation approaches that store normal vectors and colors need to store more than ten times more data.

In an embodiment, the input data comprises a machining context data related to the tool motion. The generating can comprise associating the machining context data related to the tool motion with the tool motion trajectory data. For instance, for each point in the tool motion trajectory data corresponding context data can be assigned, e.g., via indexing. The index for each point preferably corresponds to the index stored for this point in the voxel. In this way the context data can be associated to the tool motion trajectory data and to the voxels. The context data can be magnitude of velocity, curvature of the trajectory, magnitude of tool's direction, currents, voltage or any other signal from the (real or virtual) CNC machine related to the tool motion.

The machining context data is then visualized on a surface of the visualized voxel-based representation of the workpiece. For this an RGB color map can be used to represent the value of the context data (e.g., magnitude of the velocity, curvature, etc.) visualized on the surface of the workpiece's visualization. Using the grayscale for visualization of the workpiece and the RGB color map for the visualization of the context data on the workpiece's surface makes easier to identify regions on the workpiece's surface critical from the point of view of the corresponding context data.

Preferably each position in the tool motion trajectory is also mapped to its respective block in the G-Code program and vice-versa.

In an embodiment, the tool motion trajectory data comprises data from machining by two or more tools. The type of the tool is also context data that can be visualized on the workpiece's surface as described herein.

In an embodiment, the visualizing comprises detecting a user interaction with the visualized voxel-based representation of the workpiece directed to changing a view of the visualized voxel-based representation (e.g., by rotating the view, zooming, panning etc.), and, if the user interaction is detected, visualizing the voxel-based representation of the workpiece with a lower resolution. In this case the frame drawing time can be reduced, which leads to a lesser computational effort.

In an embodiment, the method further comprising increasing the resolution, preferably restoring the previous resolution, when the interaction between the user and the visualized voxel-based representation ends.

The user interaction can be detected automatically. During interaction the screen resolution is automatically reduced (down sampling) so that the rendering algorithm operates on a lower number of pixels. As soon as the user interaction has finished (e.g., user stops rotating the view) an updated image with the full resolution is generated).

The objective is also achieved by a system for monitoring a machining, in particular, subtractive machining of a workpiece with an aid of a CNC machine, the system comprising an interface configured for receiving (e.g., in real-time) input data comprising a motion trajectory data of a tool (or tool insert) of the CNC machine (a tool motion trajectory data, preferably a point cloud), wherein, during machining the workpiece, the tool (had/has been) is (had/has been) moving along the motion trajectory, a computing system configured for generating a voxel-based representation of the workpiece from the input data, wherein the generating comprises specifying a size of each voxel so that the voxel size corresponds to or is of the order of a surface roughness of a machined surface of the workpiece, and a displaying device configured for visualizing the voxel-based representation of the workpiece with a resolution determined by the voxel size.

In summary, the method provides a 3D machining process simulation emphasizing fine surface details. In an embodiment it also provides an associative mapping to the underlying machining process context. Color coding process data at the workpiece surface instead of the tool motion trajectory is much easier to understand and evaluate by the user. The user can establish a relationship between the surface patterns (quality metrics) and the CNC process which allows for quick identification of root causes of quality issues.

The above and other aspects and advantages of the subject matter disclosed herein will be further discussed in conjunction with the accompanying drawings, which indicate only some possible ways that may be practiced. The like reference characters in the drawings refer to like parts throughout.
- FIG 1: shows a system for monitoring a CNC subtractive machining of a workpiece,
- FIG 2: illustrates a flow diagram of a method for monitoring workpiece machining,
- FIG 3: illustrates possible steps of a generation of a voxel-based representation of a workpiece, and
- FIG 4: illustrates a grayscale 3D representation of a workpiece.

The reference signs used in the figures and in the claims are used for demonstrative purposes and shall not be considered as a limitation of corresponding claim features.

The system 100 comprises an interface 101 for receiving input data, a computing device 102 and a displaying device 103.

A CNC machine 104 performs a subtractive machining of a workpiece 105 located in the CNC (computer numerical control) machine 104. The workpiece is machined by a tool 106 (or a tool insert) clamped in the tool holder 107 of the CNC machine 104.

It will be appreciated by the skilled person that the CNC machine 104 can be a virtual CNC machine or, in other words, a digital twin of the CNC machine 104 performing virtual subtractive machining of a virtual workpiece.

The CNC machine comprises a CNC system 108 to control the CNC machine 104. The CNC system 108 can comprise a CNC unit 109, one or more PLCs (not shown) and an HMI (human-machine-interface) unit 110.

Beginning from the start of the machining process the tool insert 106 is moving to remove material from the raw part clamped in a workpiece holder 111. The movement of the tool 106 is defined by a part program 112 executed by the CNC system 108. The part program can be displayed via the HMI unit 110.

All kinds of data are generated during the machining process. The data comprises e.g., time series data 113 (highfrequency, low-frequency, currents, positions, velocities, voltages, etc.).

This machining data comprises a measurement data, wherein the measurement can be performed by different types of sensors typically present in the CNC machine 104 and. This can be soft sensors or hardware sensors. Some of the sensors can be a part of the CNC System 108.

The machining data can be collected by a data collecting device 114. The data collecting device is allocated with the CNC machine 104. In particular it is located at the shopfloor and can be attached to CNC machine's 104 body.

The data collecting device 114 can be designed as an edge computing device, i.e., it can comprise some computing resources enough to run different programs, e.g., monitoring programs for the machining process, and also be connected to a cloud computing platform 115 which provides more computing resources for performing an elaborative analysis of the machining data and for monitoring the machining process.

The cloud computing platform 115 can be a private 116 computing platform.

To receive the input data, the system 100 can be allocated to the data collecting device 114 or to the CNC machine 104 directly and/or to the cloud platform 115. Accordingly the system can be located at the shopfloor, where the CNC machine 114 is, or at some remote location.

Within the scope of the present invention the machining data comprises a motion trajectory data of the tool 116 (or a tool motion trajectory data). The tool motion trajectory data is provided to the system 100 via the interface 101.

In an embodiment, the machining data comprises a machining context data related to the tool motion and that can be associated with the tool's 106 trajectory. This context data can comprise one or more of:
- Kinematic characteristics of the tool motion generated by the CNC system 108 (positions, orientations, velocity, acceleration, jerk etc.)
- Geometric characteristics of the motion trajectory (e.g., curvature, continuity of the curvature, etc.)
- Part program commands, in particular G-Code commands that were used to generate the tool motion (or its corresponding sections),
- Tool parameters (e.g., parameters defining tool's geometry, such as shape type, diameter, length of the tool; wear compensation values, tool life data, etc.)
- Any further signals that indicate the operation state of the CNC machine 104 (e.g., coolant pressure and flow rate, motor currents, etc.)

It will be appreciated by those skilled in the art that the machining data can be recorded from a virtual machine. The machining context data can be real measurement data or calculated data. E.g., the tool motion trajectory, the kinematic characteristics for the tool motion, etc. can be calculated based on the part program. Some of the context data, e.g., tool parameters can be input by a user.

In an embodiment, the tool motion trajectory data is a discrete set that can be readily visualized as a point cloud, a 3D point cloud in particular.

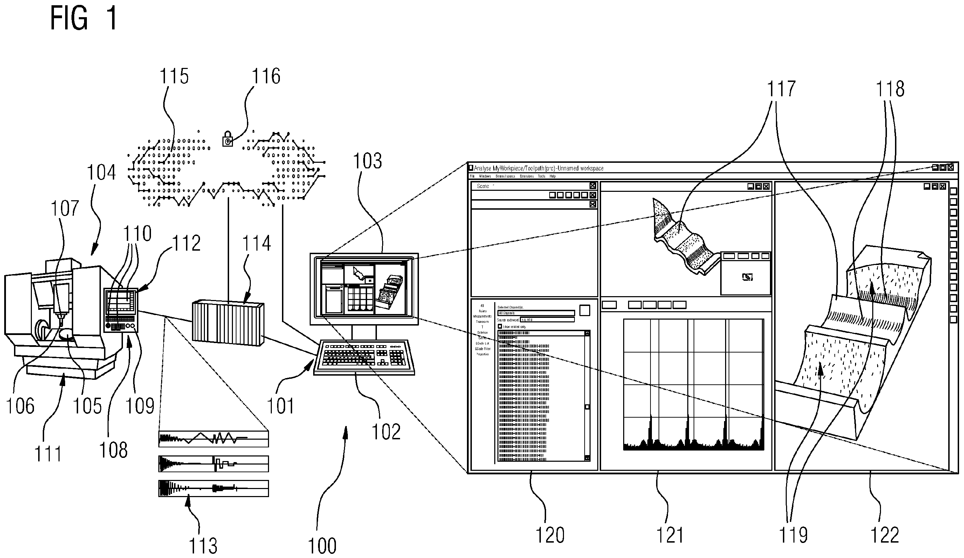

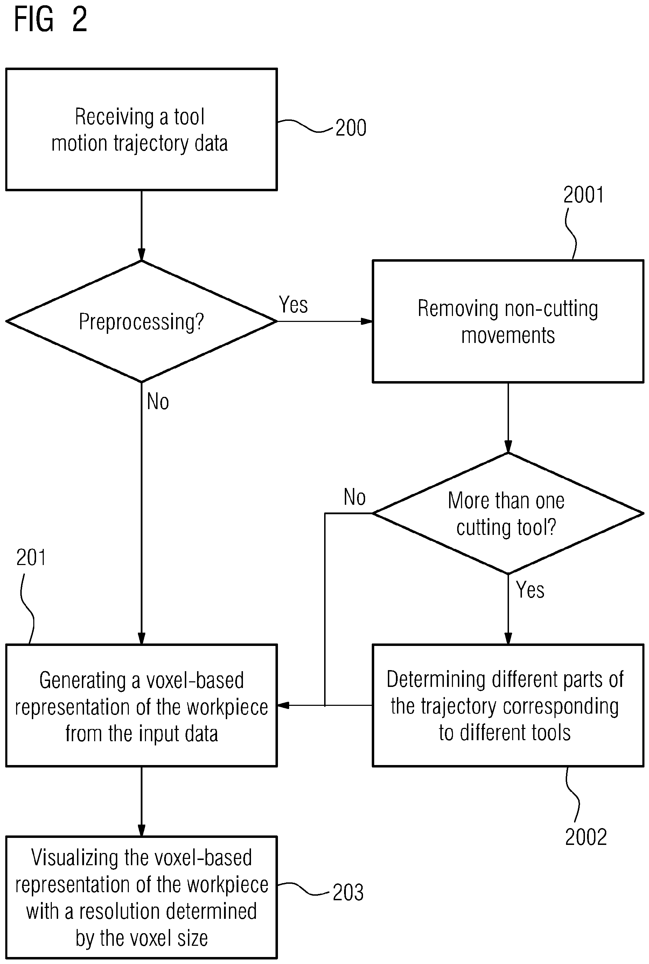

FIG 2 illustrates a flow diagram of a method for monitoring workpiece machining, e.g., for monitoring the machining process depicted on FIG 1.

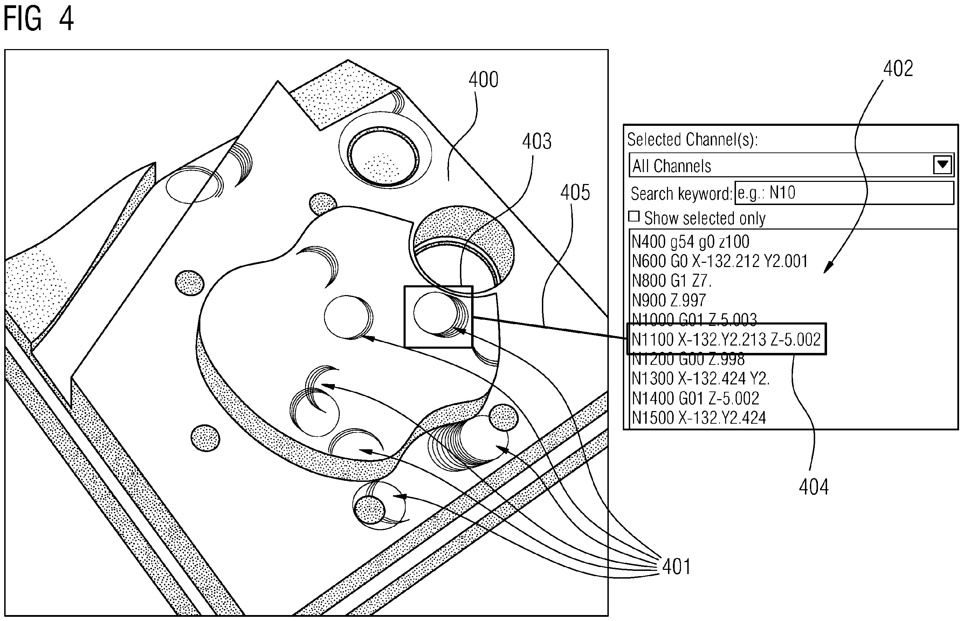

To visualize the workpiece 105 or its part (see FIG 1 and FIG 4), first the tool motion trajectory data is received 200 at the interface 101. E.g., the tool motion trajectory data can be received from the edge device 114 or from the cloud platform 115, 116. It can be measured at the CNC machine 104 or calculated from the part program code. The calculation from the part program code can be performed by the computing device 102 itself, if it receives the part program code as a machining context data, e.g., from the edge device 114 or from the cloud platform 115, 116.

Then a voxel-based representation of the workpiece 105 is generated 201. This can be done based on the tool motion trajectory data only. In some embodiments, however, it could be appropriate to use the machining context data, e.g., the tool parameters defining tool's geometry, to generate voxel-based representation of the workpiece 105.

In an embodiment, prior to the generation 201 of the voxel-based representation of the workpiece 105, the tool motion trajectory data can be preprocessed. The preprocessing can comprise one or more of the following steps:
Step 2001 is removing data that corresponds to non-cutting movements, e.g., rapid traverse G0, from the tool motion trajectory data.
Step 2002 is determining different parts of the trajectory corresponding to different tools (at different times). Preferably for each position of the trajectory the active cutting tool is determined. This can have an advantage, if more than one tool insert 106, e.g., several cutting tools, are used to manufacture the workpiece 105 and the user is interested, e.g., in analyzing a part of the workpiece 105, which has been produced by one particular tool insert 106.

The generating 201 of the voxel-based representation of the workpiece 105 comprises specifying a size of each voxel so that the voxel size is essentially of the order of a surface roughness of a machined surface of the workpiece 105.

The surface roughness can be preset or planned in advance as a setpoint value and/or measured after the machining. With this the workpiece 105 can be visualized in a resolution to see cut marks 118, 401 (see also FIG 4) on its surface.

The surface roughness Ra can be, e.g., for example a metal cutting surface roughness (between 0.4 and 6.25 micron), abrasive surface roughness, casting surface roughness, forging, extruding, laser cutting, EDM surface roughness etc. It can vary in the region between 0.01 and 50 um (microns/micrometers) and categorized in classes N1 to N12 according to ISO 1302.

The voxel size and, therefore, the number of voxels determines the accuracy of the result and can be controlled by the user.

In an embodiment, the generating 201 of the voxel-based representation of the workpiece 105 can further involve one or more of the following steps.

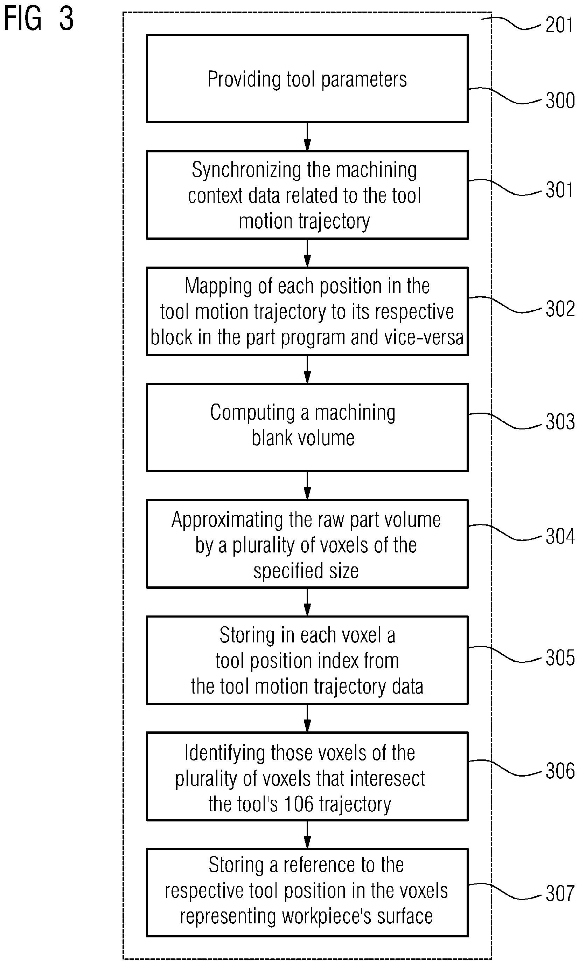

FIG 3 illustrates all these steps that can be carried out one after another or in some other order.

Step 300 is providing tool 106 parameters: shape type, diameter, length, etc., which can be performed either manually by the user or recorded from a real or virtual CNC system 108.

Step 301 is synchronizing the machining context data related to the tool 106 motion to the tool 106 motion trajectory. In an embodiment, it may be appropriate to choose only the context data, which shall be visualized and analyzed in detail. The synchronizing both data sets can be performed by indexing, so that the machining context data and the tool 106 motion trajectory data share a common index.

Step 302 is mapping of preferably each position in the tool 106 motion trajectory to its respective block in the part program and vice-versa.

Step 303 is computing a machining blank volume (for creating a voxel cube or cuboid). The raw part volume can be computed based on a bounding box dimensions of the tool 106 motion trajectory. As an alternative, a dedicated machining blank geometry can be specified by the user (e.g., an existing blank's shape).

Step 304 is approximating the raw part volume by a plurality of voxels of the specified size. The specification of the voxel size is described above.

Step 305 is storing in each voxel a tool position index from the tool motion trajectory data, wherein different tool position indexes are stored in different voxels. In this way voxels can be referenced to the tool motion trajectory data. Comparing to other voxelating methods that store normal vectors and colors the indexing approach described herein uses less data (∼ 10x less data) and, therefore, saves considerable amount of memory. This can be of an advantage, especially when a GPU of the computing device 102 is used for voxelization.

Step 306 is identifying those voxels of the plurality of voxels that intersect the tool's 106 trajectory. This corresponds to material removal simulation. In an embodiment, the indexing (Step 305) can be performed as a part of Step 306.

In an embodiment, it might be appropriate to consider a tool geometry. This can increase the accuracy of the overall visualization especially for "non-point-like" tools. Lasers and thin drill bits, e.g., can be considered as "point-like".

To account for non-zero geometry of the, e.g., cutting tool 106 those voxels of the plurality of voxels are identified, which intersect with the volume of the tool 106. In other words, those voxels of the plurality of voxels are identified that intersect not only with the trajectory but also with the volume of the tool. As the tool motion trajectory can be discrete - in form of a point cloud - the identification can be performed pointwise or, in other words, point by point for each point of the tool motion trajectory.

The volume of the tool can be calculated, e.g., from the tool parameters that can be provided with the machining context data or set by the user.

The voxels that intersect the tools trajectory or tool's volume (along the trajectory) correspond to the material that have been removed from the blank during the machining. They are not a part of the machined workpiece 105.

The identified voxels can be marked (for upcoming rendering), e.g., by assigning a particular flag value to the voxels signaling that these voxels do not belong to the machined workpiece. The flag value can be stored in the voxels.

In other words, the tool's trajectory determines the voxels that are removed from the raw part during the machining. But it also determines the surface of the machined workpiece. The nearest neighbors of the identified voxels represent or form the surface of the workpiece.

For each position of the tool 106 (for each point at the tool motion trajectory) all nearest neighbor voxels to those voxels that have been identified as removed by the tool during the machining are assigned an index corresponding to this position of the tool. The assigning this index can be included in Step 306.

In other words, the tool motion trajectory data and voxels representing the workpiece surface can share a common index.

It will be appreciated by the skilled person that if the tool 106 is not point like then there is no 1-to-1 mapping between the identified voxels and tool positions since the tool's body intersects with more than one voxel at each tool position.

Step 307 is, for the remaining voxels that are at the boundary of the machined raw part (these voxels represent the workpiece's 105 surface) or, in other words, for the surface voxels, storing a reference index to the respective tool position. The storing can be done also as a part of Step 306 after assigning a common index to the tool motion trajectory and to the corresponding voxels.

Moreover, Step 307 can comprise determining a color value (e.g., derived from the context data via a color map) for the surface voxels, wherein the coloring is based on the machining context data. This is possible, if e.g., the machining context data shares a common index with the tool motion trajectory data and the same index is used to associate the voxels with the tool motion trajectory data, i.e., stored in the corresponding voxels.

Based on the voxel-based representation of the workpiece 105 a visualization 203 of the workpiece 105 is generated on the displaying device 103 with a resolution determined by the voxel size.

FIG 1 and 4 illustrate exemplary visualizations 117, 400, wherein the visualization 117 is a visualization of the workpiece 105.

The visualization can be performed by rendering the voxel-based representation of the workpiece. The rendering can be executed by the computing device 102, e.g., by its GPU or in the cloud 115, 116,

In an embodiment, the rendering identifies the voxels that do not belong to the machined workpiece and considers them to be transparent.

In an embodiment, a ray casting rendering algorithm is used to generate a 3D representation 117, 400, of the workpiece 105 from the voxels.

In an embodiment (see FIG 4), the 3D representation 400 is a grayscale representation.

The rendering, e.g., by ray casting, can be performed so that a relative offset between next nearest voxels corresponds to a value on a grayscale or on any other color scale, e.g., on an RGB-color-map. For example, for the grayscale, the rule can be: the bigger the relative offset the darker is the corresponding pixel. Similar rules can be applied for other color maps.

A special feature of the ray casting algorithm is that small deviations between adjacent surface voxels measured in the direction of the surface normal vectors can be visually emphasized (contrast or coloring). Hence, the surface quality (e.g., the roughness Ra) of the workpiece, which is direct quality criterion, can be visually emphasized in a manner that any user can, e.g., immediately recognize regions on the workpiece surface of a poor quality.

FIG 4 illustrates a grayscale 3D representation 400 of a workpiece, e.g., of the workpiece 105, with visible cut marks 401. The existence of the greyscale is represented by the dots in FIG 4.

The 3D representation 400 can be visualized on a display device, e.g., on the display device 103. This can be carried out in an interactive way, i.e., the user can select, highlight regions of the 3D representation 400, move it and/or rotate and/or pan it and/or zoom it in or out.

In an embodiment, when the part program code is provided as a part of the input machining context data, it can bring an advantage to visualize the part program code 402 on the same displaying device at the same time (see FIG 4). When the user selects a region 403 on the visualized workpiece surface 400, a corresponding part 404 of the part program code 402 is highlighted. In an embodiment, the selection can work also in another direction, i.e., the user selects a part 404 of the part program code 402 and a corresponding region 403 on the workpiece surface 400 is selected or highlighted.

In an embodiment, the region 403 of the workpiece surface 400 and the part 404 of the part program code 402 are connected by a visual connection 405. In this way it is even more easier for the user to identify which region of the workpiece surface corresponds to which part of the part program code.

In other words, the user can select any critical area 403 of the workpiece surface 400 s/he is interested in and gets routed to the respective blocks 404 in the G-Code program.

In an embodiment, when the input data to the computing system 100 comprises the machining context data related to the tool motion and the machining context data is synchronized with the tool motion trajectory (see, e.g., Step 301 above) and, therefore, associated with the corresponding surface voxels, this context data can be visualized on the 3D representation 117, 400 of the workpiece. Here, the user can select arbitrary (scalar) process data for visualization.

FIG 1 illustrates a 3D representation 117 for which the corresponding surface voxels 119 within the 3D representation 117 of the workpiece are assigned an RGB color value which encodes a magnitude of the selected data sample, e.g., magnitude of the tool's 106 velocity, curvature of the tool's motion trajectory, a motor current, etc. The RGB color values are visualized in FIG 1 by patterns on the workpiece surface.

It will be appreciated by the skilled person that selection of parts of the workpiece surface and highlighting of corresponding parts of the part program, including the visual connection, described with regard to FIG 4 also applies to FIG 1.

In an embodiment, selection of a particular part on the workpiece surface comprises defining selection rules for parameters included in the machining context data and applying these rules for selecting corresponding regions of the workpiece surface. The rules can be in form of logical expressions which can be formulated by the user, e.g., *"highlight all surface voxels WHERE the magnitude of the velocity < 100 mm*/*min AND the curvature > 0.5".*

FIG 1 illustrates an embodiment in which the part program code, the machining context data, e.g., the velocity, and the workpiece with a surface colored according to the velocity are represented in corresponding regions 120 (G-Code), 121 (velocity), 122 (3D representation 117 of the workpiece 105) of the displaying device 103.

This produces a comprehensive overview of the machining process for the user.

The 3D representations 117, 400 can be visualized in interactive manner i.e., the user can select, highlight regions of the 3D representations 117, 400, but also move and/or rotate and/or pan them and/or zoom them in or out.

In an embodiment, the computing device 102 can detect a user interaction with the voxel-based 3D representation 117, 400 of the workpiece, wherein the interaction is directed to changing a view of the 3D representation 117, 400, e.g., by moving, rotating, zooming, panning.

If such user interaction is detected, the computing device can reduce the resolution (down sampling) of the 3D representation 117, 400, e.g., so that the rendering algorithm operates on a lower number of pixels.

This can reduce the frame drawing time and, therefore, reduce the computational cost for drawing the 3D representations 117, 400 of the workpieces. This can be of an advantage, if the rendering is performed by GPUs, which have limited computational power.

As soon as the user interaction has finished (e.g., user stops rotating the view) the computing device 102 can increase the resolution again and generate an updated image with higher, preferably with the initial (full) resolution.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. Method for monitoring a machining, in particular, subtractive machining of a workpiece (105) with an aid of a CNC machine (104), the method comprising
at an interface (101),
- receiving (200) input data comprising
a motion trajectory data of a tool (106) of the CNC machine (104), wherein, during machining of the workpiece (105), the tool (106) is moving along the motion trajectory,
at a computing system (102),
- generating (201) a voxel-based representation of the workpiece (105) from the input data, wherein the generating comprises specifying a voxel size so that the voxel size corresponds to a surface roughness of a machined surface of the workpiece,
at a displaying device (103),
- visualizing (202) the voxel-based representation of the workpiece with a resolution determined by the voxel size.

2. Method of claim 1, wherein the input data comprises a part program code (120, 402) and the method further comprises
- associating the tool motion trajectory with the part program code.

3. Method of claim 1 or 2, wherein the input data comprises a machining context data related to the tool motion,
the generating (201) comprises:
- associating (301) the machining context data related to the tool motion with the tool motion trajectory data, and
the visualizing (202) the voxel-based representation of the workpiece comprises:
- visualizing the machining context data on a surface of the visualized voxel-based representation of the workpiece.

4. Method of any one of claims 1 to 3, wherein the generating (201) comprises storing (305) in each voxel a tool position index from the tool motion trajectory data, wherein different tool position indexes are stored in different voxels.

5. Method of any one of claims 1 to 4, wherein the tool motion trajectory data comprises data from machining by two or more tools (106).

6. Method of any one of claims 1 to 5, wherein the visualizing (202) comprises:
- detecting a user interaction with the visualized voxel-based representation (117, 400) of the workpiece, wherein the interaction is directed to changing a view of the visualized voxel-based representation, and,
- if the user interaction is detected, visualizing the voxel-based representation of the workpiece with a lower resolution.

7. Method of claim 6, further comprising increasing the resolution, when the interaction between the user and the visualized voxel-based representation (117, 400) ends.

8. System (100) for monitoring a machining, in particular, subtractive machining of a workpiece (105) with an aid of a CNC machine (104), the system comprising
- an interface (101) configured for receiving (200) input data comprising a motion trajectory data of a tool (106) of the CNC machine (104), wherein, during machining of the workpiece (105), the tool (106) is moving along the motion trajectory,
- a computing system (102) configured for generating (201) a voxel-based representation of the workpiece (105) from the input data, wherein the generating comprises specifying a voxel size so that the voxel size corresponds to a surface roughness of a machined surface of the workpiece, and
- a displaying device (103) configured for visualizing (202) the voxel-based representation of the workpiece (105) with a resolution determined by the voxel size.

9. A computer program product comprising instructions which, when executed by a computer, cause the computer to carry out the method of any one of claims 1 to 7.

10. A computer-readable medium comprising a computer program product of claim 9.
